(19) Europäisches Patentamt
European Patent Office
Office européen des brevets

(11) Veröffentlichungsnummer: **0 035 074**
**A2**

(12) **EUROPÄISCHE PATENTANMELDUNG**

(21) Anmeldenummer: **80201095.9**

(22) Anmeldetag: **18.11.80**

(51) Int. Cl.³: **H 01 M 2/06**, H 01 M 2/08

(30) Priorität: **04.02.80 US 109330**

(43) Veröffentlichungstag der Anmeldung: **09.09.81 Patentblatt 81/36**

(84) Benannte Vertragsstaaten: **AT CH DE LI**

(71) Anmelder: **POWER CONVERSION, INC., 70 MacQuesten Parkway South, Mount Vernon, N.Y. 10550 (US)**

(72) Erfinder: **Jagid, Bruce, 48 Luncrest Drive, Monsey N.Y. 10952 (US)**
Erfinder: **Watson, Thomas, 704 Linda Ave., Thornwood, N.Y. 10594 (US)**

(74) Vertreter: **Ackmann, Günther, Dr.-Ing., Claubergstrasse 24, D-4100 Duisburg 1 (DE)**

(54) **Korrosionsbeständige Poldurchführung für galvanische Zellen.**

(57) Es ist eine galvanische Zelle (10) beschrieben, die bei erhöhten Temperaturen durch die in ihr enthaltenen Chemikalien korrodiert, z. B. eine Lithium/Schwefeldioxid-Zelle. Die Zelle besitzt einen Deckel (40) mit einer hermetischen Abdichtungseinrichtung (34), durch welche der positive Polstift (32) führt. Zum Korrosionsschutz ist die Abdichtungseinrichtung (34) auf ihrer nach innen gerichteten Fläche mit einer Beschichtung (48) aus einem elektrochemisch beständigen, ausgehärteten Silicon-Elastomer-Klebstoff versehen. Die galvanische Zelle besitzt eine verbesserte Lagerfähigkeit bei erhöhten Temperaturen.

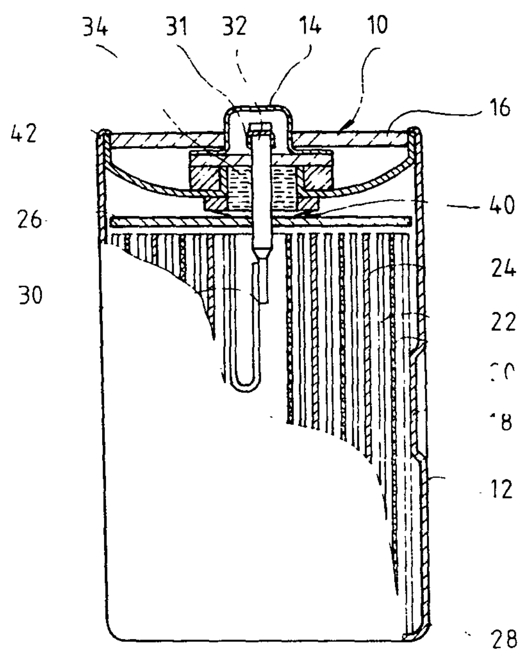


**EP 0 035 074 A2**

Patentanwalt Dr.-Ing. Günther Ackmann, 41 Duisburg, Claubergstraße 24



BEZEICHNUNG GEÄNDERT
siehe Titelseite

Duisburg, 14.11.1980

(22.1483/We)

Power Conversion Inc., 70 Mac Questen Parkway South,
Mount Vernon , N.Y. 10550, Vereinigte Staaten von Amerika

Korrosionsbeständige galvanische Zelle

Die Erfindung betrifft eine galvanische Zelle, welche korrodierende Chemikalien enthält und mit einer hermetischen Abdichtungseinrichtung versehen ist, die aus einem an einem metallischen Deckel angeordneten Isolator aus Glas oder Keramik besteht, durch den ein Polstift führt. Insbesondere betrifft die Erfindung Lithium/Schwefeldioxid-Zellen, wie sie beispielsweise aus der US-PS 37 48 186 bekannt sind.

Werden galvanische Zellen dieser Art bei hohen Temperaturen, z. B. 60 °C gelagert, ist die isolierende Glasabdichtung einer korrodierenden Zersetzung ausgesetzt, insbesondere bei einer längeren Einwirkung. Die Isolationswirkung des Glases geht verloren, wodurch eine Selbstentladung der Zelle und ein erheblicher oder völliger Verlust der Zellenkapazität in Abhängigkeit von der Temperaturhöhe und der Einwirkungszeit stattfindet.

Der Erfindung liegt die Aufgabe zugrunde, eine galvanische Zelle der genannten Art derart auszubilden, daß eine korrodierende Zersetzung der isolierenden Glasabdichtung verhindert wird.

Diese Aufgabe wird erfindungsgemäß dadurch gelöst, daß die Abdichtungseinrichtung auf ihrer nach innen weisenden Fläche mit einer Beschichtung aus einem elektrochemisch beständigen, ausgehärteten Silicon-Elastomer versehen ist.

Diese Beschichtung verhindert in vorteilhafter Weise auch bei erhöhter Temperatureinwirkung eine Zerstörung des aus Glas oder Keramik bestehenden Isolators, so daß der Kapazitätsverlust durch Selbstentladung verringert wird.

Die galvanische Zelle besitzt ein die chemischen Bestandteile enthaltendes äußeres Gehäuse und einen mit diesem verbundenen Deckel, in dem die hermetische Abdichtungseinrichtung angeordnet ist. Die hermetische Abdichtungseinrichtung weist vorzugsweise einen Isolator aus Glas- oder Keramikmasse auf, welche den Polstift isolierend umgibt. Hierfür ist die hermetische Abdichtungseinrichtung zweckmäßig mit einer Öffnung versehen, in der ein Ringkörper angeordnet ist, in den Schmelzglas eingebracht ist, welches den Polstift isolierend umgibt. Zweckmäßig enthält die Beschichtung aus Silicon-Elastomer einen durch Wärme vulkanisierbaren Klebstoff. Als Silicon-Elastomer ist besonders ein Dimethylpolysiloxan geeignet, welches Siliciumdioxid-Füller enthält, die gemahlenem Quarz entstammen.

Die Erfindung ist beispielsweise in der Zeichnung näher erläutert; es zeigt:

Fig. 1 einen Längsschnitt durch eine galvanische Zelle,

Fig. 2 einen Längsschnitt durch eine hermetische Abdichtungseinrichtung und

Fig. 3 den Gegenstand der Fig. 2 in einem Grundriß.

Eine bevorzugte Ausführung der Erfindung betrifft hermetisch abgedichtete galvanische Zellen mit Anoden aus Lithium und/oder Alkalimetall unter Einschluß der folgenden elektrochemischen Systeme, ohne jedoch hierauf beschränkt zu sein: Lithium/Schwefeldioxid; Lithium/Kohlenstoffmonofluorid; Lithium/Mangandioxid und Lithium-Jodid. Zum leichteren Verständnis wird die Erfindung anhand des Lithium-Systems beschrieben, obgleich die Erfindung bei den meisten chemisch korrodierenden Systemen gleichfalls anwendbar ist.

Die in Fig. 1 gezeigte galvanische Zelle 10 besitzt ein Gehäuse 12 aus Stahl, welches am Boden geschlossen ist und welches eine Zylinderform aufweist (vgl. auch Fig. 2 und 3 mit den vergrößerten Ausschnitt-Details). Die Basis des Gehäuses ist zur strukturellen Verstärkung und Verfestigung embossiert (nicht dargestellt). An der Basis des Gehäuses ist eine (nicht dargestellte) Füllöffnung angeschweißt, welche das Einfüllen von Elektrolyt in die Zelle ermöglicht. In der Seitenwand des Gehäuses ist ein Sicherheitsventil 18 eingeformt, welches einen Gasaustritt in die Atmosphäre, z. B. bei stark erhöhten Temperaturen erlaubt.

Die galvanische Zelle beinhaltet konzentrische ringförmige Lagen aus Anoden 20, porösen Separatoren 22, Kathoden 24 und einem Elektrolyt innerhalb des abgedichteten Gehäuses 12 zwischen einem oberen Innenisolator 26 und einem unteren Innenisolator 28.

Andere Anordnungen der Anoden, Separatoren, Kathoden und

Isolatoren sind ebenfalls möglich. Eine U-förmige innere Anschlußfahne 30 ist mit dem positiven Stiftpol 32 verbunden. Der positive Stiftpol 32 ist über ein Verbindungselement 31 mit dem äußeren positiven Anschlußpol 14, der durch eine obere Abdeckplatte 16 ragt, elektrisch leitend verbunden.

Ein konkaver Deckel 40 enthält eine hermetische Abdichtungseinrichtung 34 aus Glas, welche gegenüber dem Metall völlig abdichtet. Dieser Deckel 40 ist mittels einer peripheren Schweißung 42 mit dem oberen Rand des Gehäuses 12 verschweißt. Im Sinne dieser Erfindung kann "hermetisch" als eine Leckmenge von $10^{-3}$ $cm^3$ Helium/Sek. oder weniger definiert werden. Die hermetische Abdichtungseinrichtung 34 weist den positiven Polstift 32 aus Tantal auf, sowie einen zentrisch angeordneten Ringkörper 44 aus kaltgewalztem Stahl, der zur Bildung des Isolators 46 mit Glasmasse vergossen ist und eine druckfeste Abdichtung bildet.

Auf der Unterseite des Ringkörpers 44 und des glasförmigen Isolators 46 ist ein Überzug 48 aufgetragen, der auf Siliconbasis aufgebaut ist. Der Ausdruck Silicon bezieht sich auf eine große Gruppe organischer Siloxan-Polymere, die auf einer Struktur beruht, welche wechselweise Silicium- und Sauerstoffatome mit verschiedenen Radikalen an den Siliciumatomen aufweist:

$$-O-\underset{\displaystyle R}{\overset{\displaystyle R}{\overset{|}{\underset{|}{Si}}}}-\left[-O-\underset{\displaystyle R}{\overset{\displaystyle R}{\overset{|}{\underset{|}{Si}}}}-\right]_n-O-\underset{\displaystyle R}{\overset{\displaystyle R}{\overset{|}{\underset{|}{Si}}}}-$$

worin R ein Halogen oder eine Alkylgruppe mit typischerweise 1 bis 10 oder mehr Kohlenstoffatomen sein kann. Die Alkylgruppe kann durch ein Halogen, vorzugsweise ein Fluoratom ersetzt sein. Charakteristisch ist für R ein

Methyl, Äthyl, Propyl, Butyl usw., wobei n eine ganze Zahl ist. Diese Polymere lassen sich durch Erhitzung von Silicium in Methylchlorid zur Bildung von Methylchlorsilanen herstellen, welche durch Destillation abgetrennt und gereinigt werden. Diese Verbindung wird dann zur Bildung von polymeren Siliconen mit Wasser vermischt.

Alternativ können die Polymere durch Reaktion von Siliciumtetrachlorid mit einem Grignard-Reagenz (R Mg Cl) mit anschließender Hydrolyse und Polymerisation hergestellt werden.

Bevorzugte Silicon-Überzüge zur erfindungsgemäßen Anwendung sind Silicone oder Fluorsilicone oder ein- oder mehrteilige Kunststoffe, welche durch katalytische Reaktion bei verschiedenen Temperaturen zur Bildung vernetzter, an das Glas-Substrat gebundener Elastomere ausgehärtet werden können.

Ein bevorzugter Silicon-Überzug nach der Erfindung ist das Silicon Sylgard 170, wobei "Sylgard" ein Warenzeichen der Firma Dow Corning Corp. ist, welches für eine Gruppe von Silicon-Kunststoffen verwendet wird. Sylgard 170 ist ein zweiteiliges, bei Raumtemperatur vulkanisierendes Elastomer, welches Dimethylpolysiloxan umfaßt, das Siliciumdioxid-Füller auf der Grundlage von gemahlenem Quarz enthält.

Der Silicon-Überzug wird auf die nach innen weisende Unterfläche der vorgefertigten Abdichtungseinrichtung 34 aufgetragen und wird dann thermisch ausgehärtet um einen elastomer gebundenen Überzug zu schaffen. Nach dem Aushärten bildet Sylgard 170 eine hitzehärtbare, vernetzte Struktur von Dimethylpolysiloxan, das Silicium-Füller auf der Grundlage von gemahlenem Quarz enthält. Dieses Siliconmaterial verhindert oder verringert erheblich eine elektrochemische Korrosion der Abdichtungseinrichtung 34 und seiner angrenzenden Flächen, besonders bei längerer Wärmeeinwirkung

während des Lagerns. Der Überzug 48 aus gehärtetem Silicon-Kunststoff ist elektrochemisch beständig gegenüber den chemischen Bestandteilen der galvanischen Zelle 10. Außerdem entgast er nicht oder bildet keine korrosiven Nebenprodukte.

Die elastomeren Eigenschaften des Abdichtungsmaterials erlauben die Anwendung über einen weiten Wärmeschockbereich, ohne die Bindungseigenschaft bloßzustellen.

Kunststoffe auf Siliconbasis können für bestimmte Anwendungen und Umgebungen verschieden hart ausgehärtet werden.

Der schalenförmige Deckel 40 ist innerhalb des Gehäuses 12 der Zelle installiert und entlang seines Umfanges zur Bildung einer hermetischen Abdichtung angeschweißt. Anschließend wird Elektrolyt zur Aktivierung der galvanischen Zelle eingefüllt, und die Füllöffnung wird dann hermetisch dicht verschlossen.

Durch die Erfindung ist die gesamte Lager-Lebensdauer und Zuverlässigkeit einer galvanischen Zelle vom Lithium/Schwefeldioxid-Typ gesteigert. Eine längere Einwirkung erhöhter Temperaturen ist unter Erhaltung der maximalen Kapazität möglich. Der elastomere Siliconüberzug ist flexibel, so daß der strukturelle Zusammenhalt der Bindung sichergestellt ist. Schließlich bleibt der Siliconüberzug in der galvanischen Zelle während des Lagerns und eines Gebrauchs elektrochemisch stabil und inert.

Die Grundzüge, bevorzugten Ausführungen und Betriebsarten der vorliegenden Erfindung sind in der vorgenannten Erläuterung beschrieben worden. Doch ist die Erfindung nicht auf die beschriebenen speziellen Formen beschränkt, da diese nur illustrativ und nicht beschränkend zu betrachten sind. Abwandlungen und Änderungen im Rahmen des Erfindungsgedankens sind ohne weiteres möglich.

Patentanwalt Dr.-Ing. Günther Ackmann, 41 Duisburg, Claubergstraße 24



(22.1483/We)

Patentansprüche

1. Galvanische Zelle, welche korrodierende Chemikalien enthält und mit einer hermetischen Abdichtungseinrichtung versehen ist, die aus einem an einem metallischen Deckel angeordneten Isolator aus Glas oder Keramik besteht, durch den ein Polstift führt, dadurch gekennzeichnet, daß die Abdichtungseinrichtung (34) auf ihrer nach innen weisenden Fläche mit einer Beschichtung (48) aus einem elektrochemisch beständigen, ausgehärteten Silicon-Elastomer versehen ist.

2. Galvanische Zelle nach Anspruch 1, gekennzeichnet durch ein die chemischen Bestandteile enthaltendes äußeres Gehäuse (12) und einem mit diesem verbundenen Deckel (40), in dem die hermetische Abdichtungseinrichtung (34) angeordnet ist.

3. Galvanische Zelle nach Anspruch 1 oder 2, dadurch gekennzeichnet, daß die hermetische Abdichtungseinrichtung (34) einen Isolator (46) aus Glas- oder Kunststoffmasse aufweist, welche den Polstift (32) umgibt.

4. Galvanische Zelle nach einem der Ansprüche 1 bis 3, dadurch gekennzeichnet, daß die hermetische Abdichtungseinrichtung (34) mit einer Öffnung versehen ist, in der ein Ringkörper (44) angeordnet ist, in den Schmelzglas eingebracht ist, welches den Polstift (32) umgibt.

5. Galvanische Zelle nach einem der Ansprüche 1 bis 4, dadurch gekennzeichnet, daß die Beschichtung (48) aus Silicon-Elastomer einen durch Wärme vulkanisierbaren Klebstoff enthält.

6. Galvanische Zelle nach einem der Ansprüche 1 bis 5, dadurch gekennzeichnet, daß die Beschichtung (48) aus Silicon-Elastomer aus Dimethylpolysiloxan besteht, welches Silicium-Füller enthält, die aus gemahlenem Quarz stammen.

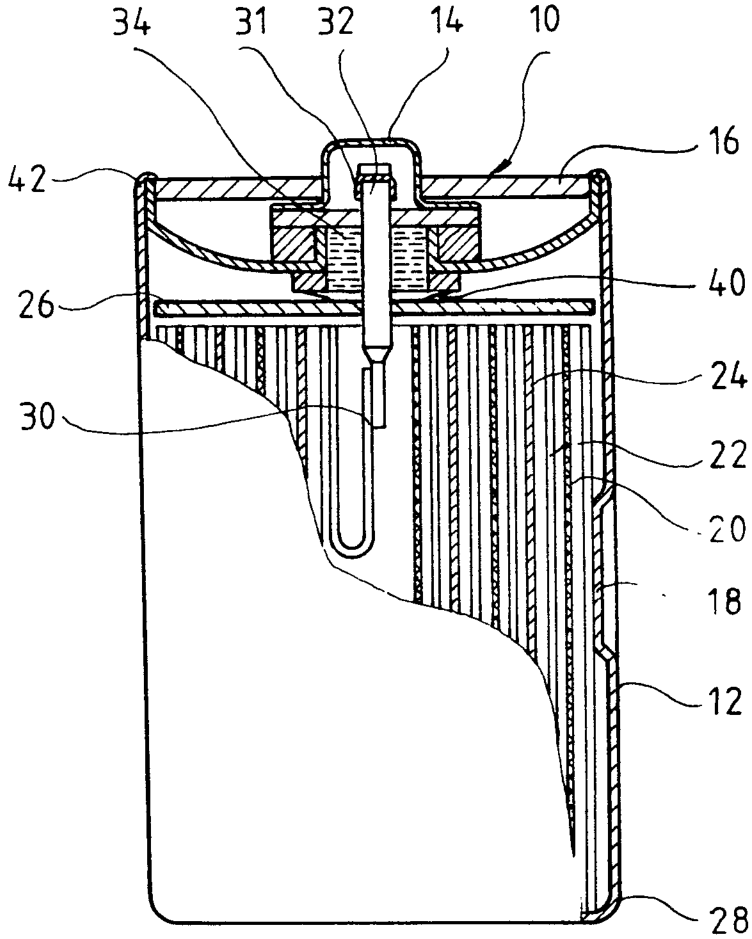


Fig. 1

0035074

2/2

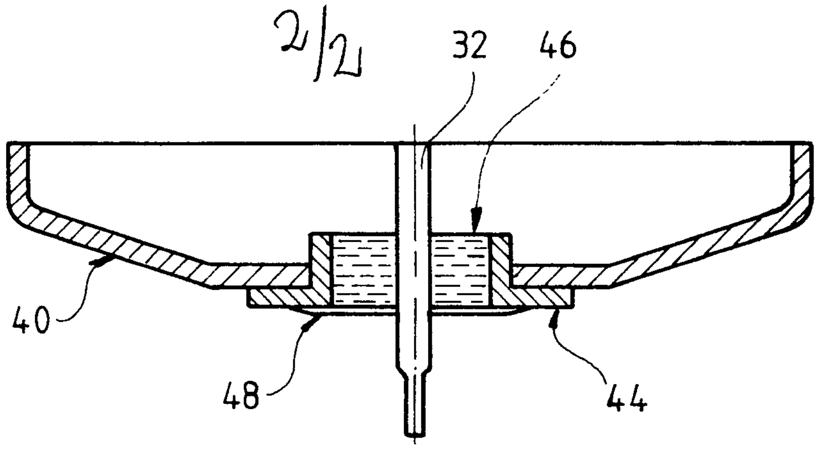


Fig.2

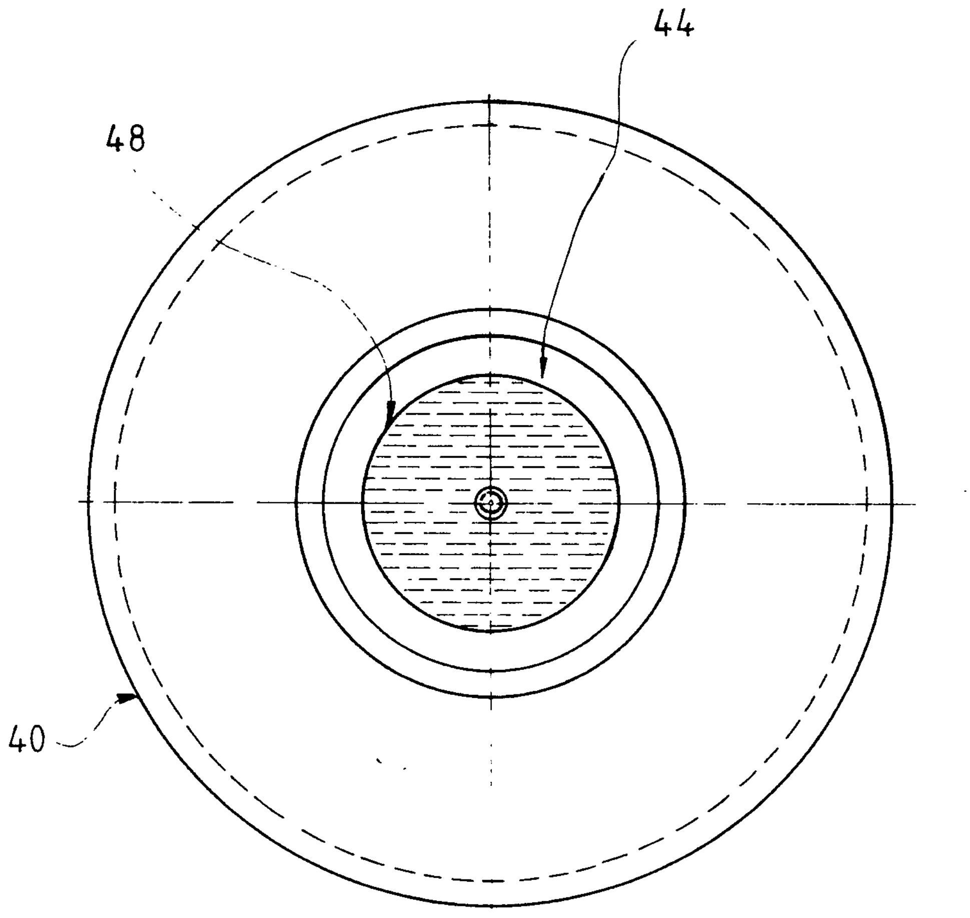


Fig.3